# FASCICULE DE BREVET EUROPEEN

(11) **EP 0 572 983 B1**
(45) Date de publication et mention de la délivrance du brevet: **12.04.1995**
(21) Numéro de dépôt: 93108807.4
(22) Date de dépôt: 01.06.1993
(51) Int. Cl.: A47J 19/02

(54) **Panier de centrifugeuse domestique et procédé de fabrication d'un tel panier**
Korb für eine Haushalt-Zentrifuge und Verfahren zum Produzieren eines solchen Korbes
Basket for domestic centrifuge and method for producing such basket

(30) Priorité: 05.06.1992 FR 9206886
(43) Date de publication de la demande: 08.12.1993
(73) Titulaire: MOULINEX S.A., F-93170 Bagnolet (FR)
(72) Inventeur: Assier, Michel Raymond Marcel, F-61000 Alencon (FR)
(74) Mandataire: May, Hans Ulrich, Dr.

(56) Documents cités:
- EP-A- 0 198 289
- EP-A- 0 301 599
- CH-A- 384 151
- CH-A- 414 077
- DE-A- 3 434 687
- GB-A- 2 018 170
- US-A- 4 090 310

## Description

L'invention se rapporte aux centrifugeuses de jus frais qui comportent un moteur entraînant en rotation à grande vitesse un panier constitué par un tamis ayant une surface de révolution finement perforée et comportant deux bagues annulaires de renfort disposées sur ses bords circulaires.

Dans les centrifugeuses connues de ce genre, par exemple telles que décrites dans le brevet GB-A-2 018 170, le tamis est réalisé soit à partir d'un flan métallique en nickel finement perforé, découpé, mis en forme et maintenu en cette forme par soudure, soit par dépôt électrolytique de nickel directement sous sa forme de révolution.

Dans une fabrication en grande série comptant par exemple plusieurs centaines de milliers de filtres, l'utilisation du nickel, du fait notamment de son coût, contraint le fabricant à réaliser les tamis selon une épaisseur minimale compatible néanmoins avec une bonne tenue mécanique en rotation. Malgré cela, les tamis restent fragiles et leur manipulation en usine est très délicate surtout lors des opérations de surmoulage des bagues, occasionnant ainsi des rebuts importants. En outre, du fait de cette faible épaisseur du tamis, il arrive que l'usager, lors du nettoyage du panier, déchire ou embosse le tamis le rendant ainsi inutilisable.

On connaît également, par exemple, par le brevet EP-198 289 des filtres réalisés en un matériau plastique et présentant des perforations de formes particulières pour éviter le colmatage. Mais ces filtres sont réalisés dans des plaques trop épaisses empêchant leur utilisation dans des centrifugeuses de jus frais.

L'invention a notamment pour but d'éliminer les inconvénients décrits ci-dessus.

Selon l'invention, le tamis est réalisé en matériau plastique et les fines perforations étant adaptées à extraire le jus de la pulpe sont obtenues par une opération de découpage mécanique, telle que par poinçonnage, et présentent des bords à arêtes vives. On comprendra que, grâce à un tamis en matériau plastique, le coût de fabrication et le prix de vente des paniers sont très inférieurs à ceux des paniers à tamis en nickel, et les rebuts sont pratiquement inexistants. En outre, le nettoyage par l'utilisateur de ces paniers n'entraîne plus de détériorations.

Les caractéristiques et avantages de l'invention ressortiront d'ailleurs de la description qui va suivre, à titre d'exemple, en référence aux dessins annexés dans lesquels :

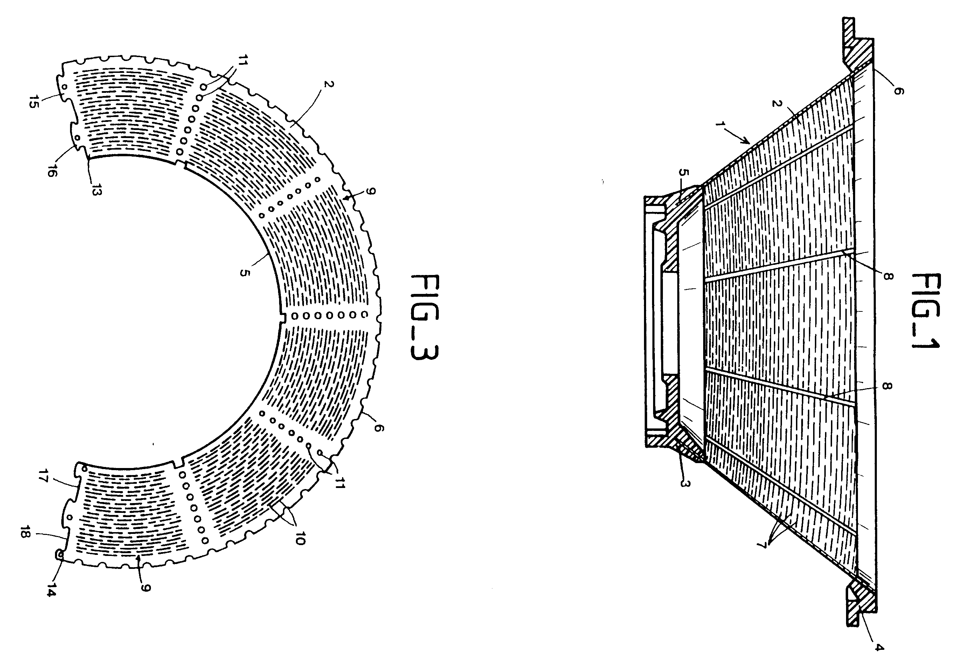

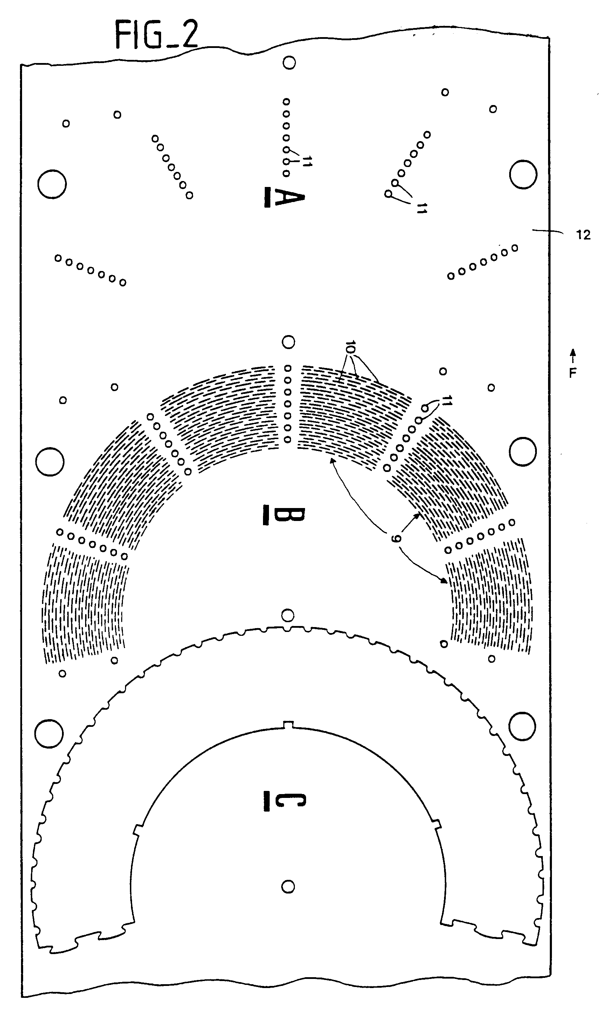

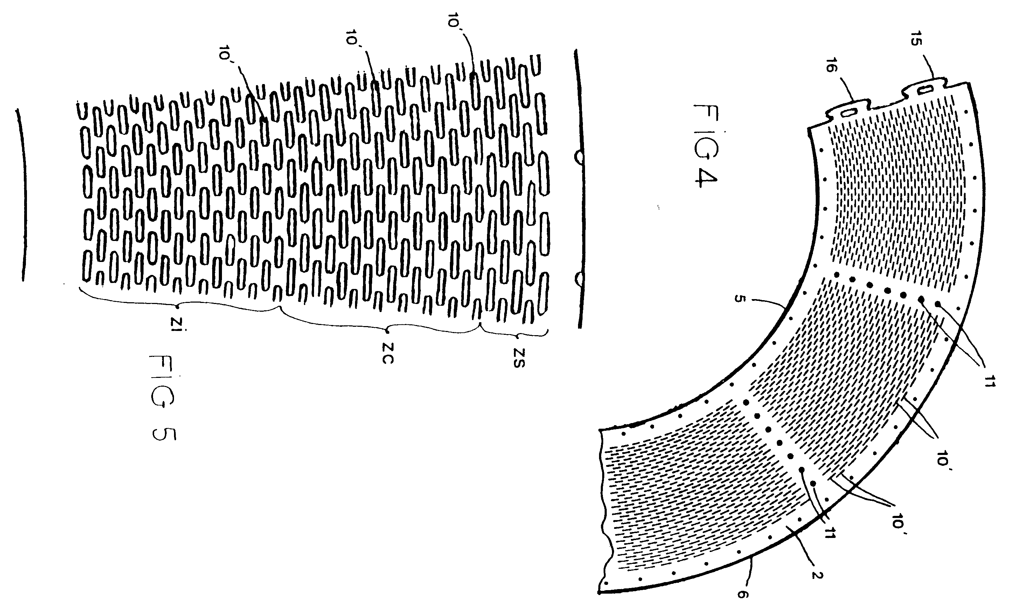

la figure 1 est une coupe verticale d'un panier de centrifugeuse comportant un tamis selon l'invention réalisé selon un premier mode de fabrication ; la figure 2 représente à plus petite échelle une bande de matière plastique dans laquelle on a illustré les différentes opérations du procédé de fabrication d'un tamis selon l'invention et selon un second mode de fabrication ; la figure 3 est une vue en plan illustrant le tamis détouré de la bande de matière plastique de la figure 2 ; la figure 4 est une vue à plus grande échelle d'un tamis selon l'invention réalisé selon un troisième mode de fabrication ; la figure 5 est une vue agrandie d'une partie du tamis de la figure 4 illustrant les perforations de ce tamis.

Comme représenté à la figure 1, le panier 1 de centrifugeuse comprend un tamis 2 ayant une surface de révolution tronconique finement perforée et comportant deux bagues annulaires de renfort 3 et 4 disposées respectivement sur les petit et grand bords circulaires 5 et 6.

Selon l'invention, le tamis 2 est réalisé en matériau plastique et les fines perforations 7 sont obtenues par une opération de découpage mécanique. Ce découpage mécanique peut se faire par un rayon LASER ou de préférence par poinçonnage au moyen d'un outil comprenant des poinçons et d'une matrice ayant des empreintes correspondantes aux poinçons (non représentés sur le dessin).

Afin de garantir une bonne tenue mécanique du tamis, le matériau plastique est un polyester et présente une paroi d'épaisseur de l'ordre de 0,15 mm à 0,30 mm et de préférence égale à 0,25 millimètres.
Le tamis 2, sans perforation, peut être obtenu soit directement en une pièce moulée sous forme tronconique, soit en une pièce moulée sous forme de secteur, soit par découpage dans une bande en polyester comme il sera expliqué ci-après en référence aux figures 2 et 3.
Chaque perforation 7 présente une forme oblongue dont la largeur est de l'ordre de 0,4 mm et dont la longueur, en fonction du choix de la distribution des perforations sur la surface du tamis, est comprise entre 2 et 3 millimètres. Grâce au poinçonnage, les perforations 7 présentent des bords à arêtes vives qui améliorent l'extraction des jus en agissant comme des rasoirs sur la pulpe centrifugée.

Selon un premier mode de fabrication illustré à la figure 1, les perforations 7 sont pratiquées sur toute la surface du tamis selon des rangées parallèles aux bords circulaires 5 et 6 et selon une distribution permettant leur chevauchement entre rangées successives.
Afin de renforcer le tamis 2, on prévoit de mouler avec les bagues de renfort 3 et 4 des nervures transversales 8 qui s'étendent selon des génératrices et qui sont ancrées dans les perforations 7.

Selon un second mode de fabrication, illustré notamment à la figure 3, le tamis 2 est divisé en plusieurs secteurs 9 qui présentent chacun des perforations 10 et qui sont séparés par des bandes vierges de perforation s'étendant selon des génératrices et présentant des lumières 11 d'ancrage destinées à recevoir les nervures 8 en matière plastique qui viennent de moulage avec les bagues de renfort 3 et 4.

Afin de garantir une certaine rigidité mécanique du tamis pour éviter des déchirements de la feuille au cours de l'opération de découpage par poinçonnage, on adopte une distribution des perforations telle que représentée à la figure 4. Ainsi, dans ce troisième mode de fabrication préféré et comme on le voit mieux sur la figure 5, les perforations 10' sont agencées en quinconce avec un léger chevauchement entre elles et forment des colonnes orientées suivant des génératrices. En outre, de manière à maintenir une certaines surface minimale entre les perforations 10' et à obtenir le même nombre de perforations aussi bien sur les rangées des zones inférieur Zi, qu'intermédiaire Zc et que supérieur Zs du tronc de cône, la longueur des perforations est différente et est dans cette fabrication égale à 2 mm pour la zone inférieure Zi, 2,4 mm pour la zone centrale Zc et 2,8 mm pour la zone supérieure Zs.

En référence aux figures 2 et 3, on va maintenant expliquer le procédé de fabrication du tamis 2. On utilise une bande 12 en matériau plastique tel que le polyester que l'on fait défiler selon un certain pas longitudinal (flèche F) en différents postes d'usinage (non représentés). Dans un premier poste A, on perfore la bande 12 pour pratiquer les lumières d'ancrage 11. Dans un second poste B, on poinçonne la bande pour pratiquer les perforations 10. Cette opération de poinçonnage peut être réalisée soit en une seule fois au moyen d'un outil comportant autant de poinçons que de perforations, soit en plusieurs passes au moyen d'un outil ou plusieurs outils comportant respectivement deux rangées de poinçons et monté mobile sur un support (non représenté) qui est entraîné séquentiellement en rotation et qui balaye angulairement d'une extrémité à l'autre du tamis les secteurs 9 à perforer. Le pilotage de cette rotation séquentielle est commandé par un automate programmable. Dans un troisième poste C, on détoure le tamis 2 en ménageant dans les extrémités 13 et 14 des tenons 15-16 et des mortaises 17-18 (voir figure 3) qui vont constituer un dispositif de verrouillage mutuel desdites extrémités 13 et 14 pour maintenir le secteur de tamis 2 en forme tronconique. Puis ledit tamis 2 ainsi conformé est amené à un poste de surmoulage de manière à former les bagues 3 et 4 ainsi que les nervures 8.

Grâce à ce procédé de fabrication, on réalise une production en grande série de tamis sans pratiquement de rebuts puisque le poinçonnage s'effectue de façon précise et propre dans la bande en matière plastique qui défile entre les matrices et les poinçons. En outre, le tamis une fois comformé en tronc de cône et surmoulé, acquiert une résistance mécanique surprenante permettant son utilisation sans précaution particulière.

## Revendications

1. Panier de centrifugeuse domestique de jus frais comprenant un tamis (2) ayant une surface de révolution finement perforée et comportant deux bagues annulaires de renfort (3 et 4) disposées sur ses bords circulaires (5, 6),
**caractérisé en ce que** le tamis (2) est réalisé en matériau plastique et les fines perforations (7, 10, 10') étant adaptées à extraire le jus de la pulpe sont obtenues par une opération de découpage mécanique, telle que par poinçonnage, et présentent des bords à arêtes vives.

2. Panier de centrifugeuse selon la revendication 1,
**caractérisé en ce que** le matériau plastique est un polyester.

3. Panier de centrifugeuse selon la revendication 2,
**caractérisé en ce que** le tamis (2) en polyester présente une paroi d'épaisseur comprise entre 0,15 mm et 0,30 mm.

4. Panier de centrifugeuse selon la revendication 2 ou la revendication 3,
**caractérisé en ce que** le tamis (2) est formé par une découpe d'une feuille dans une bande (12) et comporte un dispositif d'assemblage mutuel de ses extrémités (13, 14) de manière à le maintenir dans sa forme de révolution.

5. Panier de centrifugeuse selon l'une quelconque des revendications précédentes,
**caractérisé en ce que** le tamis (2) est divisé en plusieurs secteurs (9) qui présentent chacun les fines perforations(10, 10') et qui sont séparés par des bandes vierges de perforation s'étendant selon des génératrices et présentant des lumières (11) d'ancrage destinées à recevoir des nervures (8) en matière plastique venues de moulage avec les bagues de renfort (3 et 4).

6. Panier de centrifugeuse selon l'une quelconque des revendications précédentes,
**caractérisé en ce que** les perforations (10') sont agencées en quinconce et forment ainsi des colonnes orientées suivant des génératrices, lesdites perforations d'une colonne chevauchant légèrement les perforations des colonnes voisines.

7. Panier de centrifugeuse selon l'une quelconque des revendications précédentes,
**caractérisé en ce que** le tamis (2), présentant une forme tronconique, les perforations (10') sont pratiquées selon des rangées parallèles aux bords circulaires (5, 6) du tronc de cône et présentent chacune une forme oblongue dont la longueur est fonction de la rangée de manière à obtenir le même nombre de perforations aussi bien sur les rangées des zones inférieure (Zi), qu'intermédiaire (Zc) et que supérieure (Zs).

8. Procédé de fabrication d'un tamis selon la revendication 4, et l'une quelconque des revendications 5 à 7,
**caractérisé en ce que** l'on utilise une bande (12) en matériau plastique ; on déplace ladite bande selon un certain pas longitudinal en différents postes d'usinage (A, B, C) ; dans le premier poste (A) on perfore la bande 12 pour pratiquer des lumières d'ancrage (11) ; dans le second poste (B) on poinçonne la bande (12) pour pratiquer les perforations (7) au moyen d'un outil comportant au moins deux rangées de poinçons et entraîné séquentiellement de manière à balayer la surface à perforer ; dans le troisième poste (C) on détoure le tamis (2) en ménageant dans les extrémités (13, 14) des tenons (15, 16) et des mortaises (17, 18) pour constituer un dispositif de verrouillage ; on maintient le tamis (2) sous sa forme de révolution grâce au dispositif de verrouillage mutuel des extrémités (13, 14) ; et on procède au surmoulage des bagues (3, 4) et des nervures (8).

## Claims

1. A domestic extractor basket for fresh juice comprising a sieve (2) having a finely perforated surface of revolution and comprising two annular reinforcing rings (3 and 4) disposed on its circular edges (5, 6),
**characterised in that** the sieve (2) is made from plastic material and the fine perforations (7, 10, 10'), which are adapted to extract the juice from the pulp, are obtained by a mechanical blanking operation, such as by punching, and have sharp edges.

2. An extractor basket according to Claim 1,
**characterised in that** the plastic material is a polyester.

3. An extractor basket according to Claim 2,
**characterised in that** the sieve (2) made from polyester has a wall having a thickness of between 0.15 mm and 0.30 mm.

4. An extractor basket according to Claim 2 or Claim 3,
**characterised in that** the sieve (2) is formed by a blank from a sheet in a strip (12) and comprises a mutual assembly device for its ends (13, 14) so as to keep it in its shape of revolution.

5. An extractor basket according to any one of the preceding Claims,
**characterised in that** the sieve (2) is divided into several sectors (9), each of which has the fine perforations (10, 10') and which are separated by blank perforation strips extending along generatrices and having attachment holes (11) intended to receive ribs (8) made of plastic material moulded together with the reinforcing rings (3 and 4).

6. An extractor basket according to any one of the preceding Claims,
**characterised in that** the perforations (10') are staggered and thus form columns orientated along generatrices, the said perforations of a column slightly overlapping the perforations of the neighbouring columns.

7. An extractor basket according to any one of the preceding Claims,
**characterised in that**, as the sieve (2) has a truncated shape, the perforations (10') are made along rows parallel to the circular edges (5, 6) of the truncated cone and each perforation has an oblong shape, the length of which depends on the row in order to obtain the same number of perforations both on the rows of the lower zones (Zi) and also the intermediate zones (Zc) and upper zones (Zs).

8. A manufacturing process for a sieve according to Claim 4, and any one of Claims 5 to 7,
**characterised in that** a strip (12) of plastic material is used; the said strip is moved along a certain longitudinal pitch into various machining stations (A, B, C); at the first machining station (A) the strip 12 is perforated to provide attachment holes (11); at the second machining station (B) the strip (12) is punched to provide the perforations (7) by means of a tool comprising at least two rows of male moulds and driven sequentially so as to sweep the surface to be perforated; at the third machining station (C) the sieve (2) is cut out, at the same time providing in the ends (13, 14) catches (15, 16) and notches (17, 18) to form a locking device; the sieve (2) is kept in its shape of revolution thanks to the mutual locking device of the ends (13; 14), the insert moulding of the rings (3, 4) and of the ribs (8) is performed.

## Patentansprüche

1. Korb für eine Haushaltszentrifuge für frischen Saft, mit einem Sieb (2) mit einer fein perforierten Rotationsfläche und zwei an dessen kreisrunden Kanten (5 und 6) angeordneten Verstärkungsringen (3 und 4), **dadurch gekennzeichnet**, daß das Sieb (2) aus einem Kunststoffmaterial hergestellt ist und die zur Extraktion des Saftes aus der Pulpe angepaßten feinen Löcher (7, 10, 10') durch einen mechanischen Schneidvorgang, wie durch Stanzen, erhalten werden und Ränder mit scharfen Kanten aufweisen.

2. Zentrifugenkorb nach Anspruch 1, dadurch gekennzeichnet, daß das Kunststoffmaterial ein Polyester ist.

3. Zentrifugenkorb nach Anspruch 2, dadurch gekennzeichnet, daß das Sieb (2) aus Polyester eine Wandstärke zwischen 0,15 und 0,30 mm hat.

4. Zentrifugenkorb nach Anspruch 2 oder Anspruch 3, dadurch gekennzeichnet, daß das Sieb (2) durch Ausschneiden eines Blattes aus einer Bahn (12) gebildet wird und eine Befestigungsvorrichtung zur gegenseitigen Befestigung seiner Enden (13, 14) auf die Art und Weise, daß das Sieb in seiner Rotationsform gehalten wird, aufweist.

5. Zentrifugenkorb nach einem der vorhergehenden Ansprüche, dadurch gekennzeichnet, daß das Sieb (2) in verschiedene Bereiche (9) unterteilt ist, die jeweils die feinen Perforationen (10, 10') aufweisen, und die Bereiche (9) durch sich längs Mantellinien erstreckenden unperforierten Streifen getrennt sind, wobei diese Streifen Verankerungslöcher (11) zur Aufnahme von Verstärkungsrippen aus Kunststoffmaterial aufweisen, die durch Formgießen zusammen mit den Verstärkungsringen (3 und 4) hergestellt sind.

6. Zentrifugenkorb nach einem der vorhergehenden Ansprüche, dadurch gekennzeichnet, daß die Perforationen (10') wechselständig angeordnet sind und auf diese Art den Mantellinien folgende Kolonnen bilden, wobei diese Perforationen einer Kolonne die Perforationen der benachbarten Kolonnen leicht überlappen.

7. Zentrifugenkorb nach einem der vorhergehenden Ansprüche, dadurch gekennzeichnet, daß das Sieb (2) eine kegelstumpfartige Gesalt hat, die Perforationen (10') gemäß den zu den kreisrunden Kanten (5 und 6) des Kegelstumpfs parallelen Reihen angeordnet sind und jeweils eine längliche Form aufweisen, deren Länge eine Funktion der Reihenart ist, um überhaupt die selbe Anzahl von Perforationen in den Reihen des unteren (Zi), mittleren (Zc) und oberen Bereichs (Zs) zu erhalten.

8. Verfahren zur Herstellung eines Siebes gemäß Anspruch 4 und einem der Ansprüche 5 bis 7, **dadurch gekennzeichnet**, daß eine Bahn (12) aus einem Kunststoffmaterial verwendet wird; man die kontinuierliche Bahn gemäß eines bestimmten, verschiedenen Bearbeitungsstellen (A, B, C) entsprechenden Schritts in Längsrichtung verschiebt; man an der ersten Bearbeitungsstelle (A) die kontinuierliche Bahn (12) zum Anbringen der Verankerungslöcher (11) perforiert; man an der zweiten Bearbeitungsstelle (B) die Bahn (12) stanzt, um die Perforationen (7) mittels einer Arbeitsvorrichtung anzubringen, die wenigstens zwei Reihen Stanzstempel enthält und sequentiell so angetrieben ist, daß sie die gesamte zu perforierte Oberfläche überstreicht; man an der dritten Bearbeitungsstelle (C) zur Bildung einer Einrastvorrichtung das Sieb (2) ausschneidet und dabei Nasen (15, 16) und Ausschnitte (17, 18) an den Enden (13, 14) bildet; man das Sieb (2) mit Hilfe der Einrastvorrichtung für die gegenseitige Verbindung der Enden (13, 14) in seiner Rotationsform hält; und man dann darüber die Verstärkungsringe (3, 4) und die Verstärkungsrippen (8) formt.
